# EUROPÄISCHE PATENTSCHRIFT

(11) **EP 2 888 301 B1**
(45) Veröffentlichungstag und Bekanntmachung des Hinweises auf die Patenterteilung: **09.10.2019**
(21) Anmeldenummer: 13756016.5
(22) Anmeldetag: 20.08.2013
(51) Int. Cl.: C08G 18/10, C08G 18/48, C08G 18/66, C08G 18/12, C08G 18/32, C09J 175/04

(54) **STRUKTURELLER POLYURETHANKLEBSTOFF**
STRUCTURAL POLYURETHANE ADHESIVE
COLLE POLYURÉTHANE STRUCTURELLE

(30) Priorität: 24.08.2012 EP 12181776
(43) Veröffentlichungstag der Anmeldung: 01.07.2015
(73) Patentinhaber: Sika Technology AG, 6340 Baar (CH)
(72) Erfinder: KELCH, Steffen, CH-8102 Oberengstringen (CH); ROOCK, Wolfgang, 25482 Appen (DE); ITTRICH, Florian, 25421 Pinneberg (DE)
(74) Vertreter: Sika Patent Attorneys
(86) Internationale Anmeldenummer: PCT/EP2013/067345
(87) Internationale Veröffentlichungsnummer: WO 2014/029787

(56) Entgegenhaltungen:
- EP-A1- 0 504 681
- EP-A1- 1 690 880

## Beschreibung

### Technisches Gebiet

Die Erfindung betrifft das Gebiet der zweikomponentigen Polyurethanklebstoffe, insbesondere der strukturellen Polyurethanklebstoffe.

### Stand der Technik

Zweikomponentige Polyurethanzusammensetzungen auf der Basis von Polyolen und Polyisocyanaten werden seit langem als elastische Klebstoffe eingesetzt. Sie härten nach dem Mischen schnell aus und können deshalb bereits nach kurzer Zeit Kräfte aufnehmen und übertragen.

Strukturelle Klebstoffe, auch Konstruktionsklebstoffe oder Montageklebstoffe genannt, werden in der Fertigungsindustrie verwendet, um Bauteile so miteinander zu verkleben, dass der Klebeverbund Teil einer dauerhaft belastbaren Konstruktion ist. Solche Klebstoffe sind typischerweise zäh-elastisch und müssen hohe Ansprüche in Bezug auf Verarbeitbarkeit, Festigkeit und Anhaftungskräfte erfüllen.

Für viele geklebte Konstruktionen ist es wichtig, dass der Klebstoff über den ganzen Bereich seiner Gebrauchstemperatur, insbesondere im Temperaturbereich von etwa - 35 °C bis etwa + 85 °C, eine möglichst einheitliche Festigkeit aufweist, beispielsweise ein möglichst einheitliches Elastizitätsmodul, sodass das mechanische Verhalten des Klebeverbunds in geeigneter Weise in die Berechnung der Konstruktion einfliessen kann. Erwünscht sind insbesondere zäh-elastische Klebstoffe von hoher Festigkeit und hoher Dehnbarkeit mit einer wenig ausgeprägten Abhängigkeit der mechanischen Eigenschaften von der Temperatur. Diese Klebstoffe sollen gut verarbeitbar sein, auch in höheren Schichtdicken von bis zu 10 Millimetern und mehr verwendbar sein, sowohl bei Umgebungstemperatur als auch in einem durch Wärme beschleunigten Aushärtungsprozess störungsfrei zur Endfestigkeit gehärtet werden können und eine gute Anbindung an metallische und nichtmetallische Substrate zeigen.

Weiter besteht ein Bedarf nach Klebstoffen, welche die vorgenannten Eigenschaften aufweisen und zusätzlich im ausgehärteten Zustand durch eine spezifische Behandlung leicht wieder vom Substrat, auf welchem sie haften, gelöst werden können, ohne dass durch diese Behandlung das Substrat beschädigt wird, die Verklebung also ohne Beschädigung der verklebten Bauteile gelöst werden kann. Das Dokument EP 0 504 681 A1 offenbart ein Verfahren zum Verkleben von Substraten aus glasfaserverstärktem Polyesterharz (SMC oder BMC) bei Raumtemperatur ohne Vorbehandlung, unter Verwendung von Klebstoffen, enthaltend ein Isocyanatprepolymer a) und eine isocyanatreaktive Komponente b). In den Beispielen 1-3 wird die Herstellung dieser Klebstoffe beschrieben: Zuerst wird ein NCO-terminiertes Prepolymer aus MDI bzw. PMDI hergestellt. Das NCO-terminierte Prepolymer enthält auch unreagierte MDI-Monomere, daher werden ein Polyisocyanat und ein NCO-terminiertes Prepolymer verwendet. Dann wird eine Polymischung ("1") hergestellt aus einem Polyethertriol (OH-Zahl 28 mg KOH/g entspricht 6010 g/mol), Butandiol-1,4 und IPDA.

### Darstellung der Erfindung

Aufgabe der vorliegenden Erfindung ist es daher, einen Polyurethanklebstoff zur Verfügung zu stellen, welcher über eine hohe Festigkeit und eine hohe Dehnbarkeit bei einer nur schwach ausgeprägten Abhängigkeit der mechanischen Eigenschaften von der Temperatur verfügt und sich damit hervorragend als struktureller Klebstoff eignet, und welcher auf eine das Substrat nicht-zerstörende Weise wieder vom Substrat, auf dem er im ausgehärteten Zustand haftet, gelöst werden kann.

Überraschenderweise wurde gefunden, dass ein Polyurethanklebstoff nach Anspruch 1 diese Aufgabe löst. Durch seine spezielle Zusammensetzung weist der Klebstoff eine gute Verarbeitbarkeit mit hoher Standfestigkeit nach dem Vermischen der Komponenten, eine gute Anfangshaftfestigkeit, eine rasche und störungfreie Aushärtung sowie eine sehr hohe Festigkeit im ausgehärteten Zustand auf, ohne dabei an Dehnbarkeit und Elastizität einzubüssen.

Die erzielte Kombination aus Festigkeit und Dehnung über einen Anwendungsbereich von -35 °C bis +85 °C ist verbunden mit einer erhöhten Schlagzähigkeit des ausgehärteten Materials.

Besonders überraschend ist dabei der Umstand, dass Klebeverbindungen enthaltend den ausgehärteten Polyurethanklebstoff durch Erwärmung auf eine Temperatur von mindestens 120 °C, insbesondere auf eine Temperatur im Bereich von 140 °C bis 200 °C, während mindestens 10 Minuten, insbesondere während mindestens 20 Minuten, wieder gelöst werden können, der Klebstoff also vom Substrat gelöst werden kann. Der Temperaturbereich, in welchem die Entklebung erfolgt, ist dabei sehr vorteilhaft. Er befindet sich deutlich oberhalb der Gebrauchstemperatur von vielen Klebeverbindungen, ist aber doch so niedrig, dass viele interessante Substrate bzw. verklebte Bauteile durch den Entklebungsprozess nicht in ihrer Funktion beschädigt werden. Dieses vorteilhafte Verhalten wird zumindest teilweise durch das alkoxylierte aromatische Diol erreicht.

Ausserdem wurde festgestellt, dass man mit dem erfindungsgemässen Polyurethanklebstoff eine besonders gute Haftung auf metallischen Oberflächen und nicht metallischen Werkstoffen, insbesondere faserverstärkten Verbundwerkstoffen wie Glasfaser-verstärkten Kunststoffen und Kohlefaser-verstärkten Kunststoffen, erzielt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polyurethanklebstoff bestehend aus einer ersten und einer zweiten Komponente, wobei
- die erste Komponente
   a) mindestens ein Triol **A1** mit einem Molekulargewicht im Bereich von 1'000 bis 10'000 g/mol,
   b) mindestens ein Diol **A2** mit zwei primären Hydroxylgruppen und einem Molekulargewicht im Bereich von 60 bis 150 g/mol, und
   c) mindestens ein alkoxyliertes aromatisches Diol **A3** mit einem Molekulargewicht im Bereich von 300 bis 1'000 g/mol, und
   d) mindestens ein aliphatisches Polyamin **A4** mit einem Molekulargewicht im Bereich von 60 bis 500 g/mol enthält; und
- die zweite Komponente
   e) mindestens ein Polyisocyanat **B1** und
   f) mindestens ein Isocyanatgruppen aufweisendes Polyurethanpolymer **B2** enthält;
- wobei das Triol **A1,** das Diol **A2** und das alkoxylierte aromatische Diol **A3** in einer solchen Menge vorhanden sind, dass
   g) das Gewichtsverhältnis **A1**/(**A2**+**A3**) ≤ 10, und
   h) das Gewichtsverhältnis **A1**/**A2** ≤ 15 beträgt.

Bei dem aliphatischen Polyamin **A4** mit einem Molekulargewicht im Bereich von 60 bis 500 g/mol handelt es sich um ein Amin mit zwei oder drei aliphatischen Aminogruppen, ausgewählt aus:
- aliphatischen, cycloaliphatischen oder arylaliphatischen primären Diaminen,
- Ethergruppen-haltigen aliphatischen primären Diaminen, und
- Polyoxyalkylen-Triaminen, welche Produkte aus der Aminierung von Polyoxyalkylen-Triolen darstellen.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter dem "Molekulargewicht" versteht man bei Polymeren im vorliegenden Dokument stets das mittlere Molekulargewicht.

Als "primäre Hydroxylgruppe" wird eine OH-Gruppe bezeichnet, welche an ein C-Atom mit zwei Wasserstoffen gebunden ist.

Der Begriff "Phasenseparierung" beschreibt in diesem Dokument den Vorgang der Entmischung von hochgeordneten ("kristallinen") Bereichen, auch "Hartsegmente" genannt, und wenig geordneten ("amorphen") Bereichen, auch "Weichsegmente" genannt, bei der Aushärtung des Polyurethanklebstoffes. Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul) im Dehnungsbereich bis 10% gemeint sind.

Als "Klebeverbindung" wird im vorliegenden Dokument eine feste Verbindung von mindestens zwei Substraten aus gleichem oder unterschiedlichem Material über einen Klebstoff bezeichnet.

Als "Entkleben" einer Klebeverbindung wird im vorliegenden Dokument die gezielte Schwächung des Klebstoffs in Bezug auf dessen Festigkeit bezeichnet. Dadurch wird die mechanische Trennung der Substrate mit relativ geringem Kraftaufwand ermöglicht, d.h. die Klebeverbindung gut lösbar. Die Trennung kann entweder adhäsiv zwischen Klebstoff und einer Substratoberfläche oder kohäsiv im Klebstoff erfolgen.

Als "Raumtemperatur" wird im vorliegenden Dokument eine Temperatur von 23 °C bezeichnet.

Der Begriff "lagerstabil" bezeichnet die Eigenschaft einer Zusammensetzung, dass sie in einem geeigneten Gebinde während mehreren Wochen bis einige Monate bei Raumtemperatur aufbewahrt werden kann, ohne dass sie sich in ihren Anwendungs- oder Gebrauchseigenschaften durch die Lagerung wesentlich verändert.

Als Triol **A1** geeignet sind insbesondere Polyoxyalkylentriole, auch Polyethertriole genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.
Bevorzugt als Triol **A1** sind Polyoxypropylentriole, Polyoxyethylentriole und Polyoxypropylen-Polyoxyethylen-Triole.

Besonders bevorzugt weist das Triol **A1** primäre Hydroxylgruppen auf. Dadurch ist der Polyurethanklebstoff weniger anfällig auf unerwünschte Reaktionen von Isocyanatgruppen mit gegebenenfalls vorhandenem Wasser, wodurch Blasen und eine unvollständige Aushärtung entstehen können.

Besonders bevorzugt als Triol **A1** sind sogenannte "EO-endcapped" (ethylene oxide-endcapped) Polyoxypropylentriole. Letztere sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen. Gegenüber reinen Polyoxyethylentriolen weisen sie den Vorteil auf, dass sie weniger hydrophil und bei Raumtemperatur flüssig sind.

Das Triol **A1** weist bevorzugt eine mittlere OH-Funktionalität im Bereich von 2.2 bis 3 auf. Mit solchen Triolen **A1** werden Klebstoffe mit guten mechanischen Eigenschaften erhalten.

Das Triol **A1** weist bevorzugt ein Molekulargewicht im Bereich von 3'000 bis 8'000 g/mol, besonders bevorzugt von 4'000 bis 6'000 g/mol, auf. Ein solches Triol weist eine gute Kombination aus hoher Funktionalität und Kettenlänge auf, sodass damit ein Klebstoff mit guten mechanischen Eigenschaften erhalten wird.

Das Triol **A1** wird bevorzugt in einer Menge von 30 bis 70 Gewichts-% bezogen auf das Gesamtgewicht der ersten Komponente eingesetzt.

Als Diol **A2** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole weisen primäre, sterisch kaum gehinderte Hydroxylgruppen auf, welche mit Isocyanatgruppen besonders reaktiv sind.

Bevorzugt handelt es sich beim Diol **A2** um ein lineares Diol, insbesondere ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind, und bei der Aushärtung des Klebstoffes Urethangruppen ergeben, welche eine hohe Festigkeit bei guter Dehnbarkeit über einen weiten Temperaturbereich begünstigen.
Davon am meisten bevorzugt ist 1,4-Butandiol.

Beim alkoxylierten aromatischen Diol **A3** handelt es sich um ein Polyether-Diol mit einem aromatischen Kern, wie es insbesondere durch Alkoxylierung eines aromatischen Diols mit zwei phenolischen OH-Gruppen erhältlich ist.

Bevorzugt stellt das alkoxylierte aromatische Diol **A3** ein ethoxyliertes und/oder propoxyliertes und/oder ein butoxyliertes aromatisches Diol dar, insbesondere ein ethoxyliertes und/oder propoxyliertes aromatisches Diol. Diese Diole sind besonders gut zugänglich.
Besonders bevorzugt stellt das alkoxylierte aromatische Diol **A3** ein propoxyliertes aromatisches Diol dar. Diese Diole sind hydrophob und besonders niedrigviskos, wodurch gut verarbeitbare Klebstoffe mit guter Beständigkeit gegenüber Feuchtigkeit im ausgehärteten Zustand erhalten werden.
Der aromatische Teil des alkoxylierten aromatischen Diols **A3** stellt bevorzugt einen Benzolrest, Naphthalinrest, Diphenylmethanrest, 1,1-Diphenylethanrest, 2,2-Diphenylpropanrest, Diphenyletherrest, Benzophenonrest, Bis(phenyl)-sulfonrest oder Biphenylrest dar.
Davon bevorzugt sind der Diphenylmethanrest und der 2,2-Diphenylpropanrest. Diese aromatischen Reste sind abgeleitet von Bisphenol F bzw. Bisphenol A. Solche alkoxylierte aromatische Diole **A3** ergeben gut verarbeitbare Klebstoffe mit besonders hohen Festigkeiten.

Besonders bevorzugt handelt es sich beim alkoxylierten aromatischen Diol **A3** um ein propoxyliertes Bisphenol A oder um ein propoxyliertes Bisphenol F, insbesondere um ein propoxyliertes Bisphenol A.

Das alkoxylierte aromatische Diol **A3** weist bevorzugt ein Molekulargewicht im Bereich von 350 bis 500 g/mol auf. Diese Diole **A3** ergeben besonders hohe Festigkeiten.

Bei dem aliphatischen Polyamin **A4** mit einem Molekulargewicht im Bereich von 60 bis 500 g/mol handelt es sich um ein Amin mit zwei oder drei aliphatischen Aminogruppen, ausgewählt aus:
- aliphatischen, cycloaliphatischen oder arylaliphatischen primären Diaminen,
- Ethergruppen-haltigen aliphatischen primären Diaminen, und
- Polyoxyalkylen-Triaminen, welche Produkte aus der Aminierung von Polyoxyalkylen-Triolen darstellen.

Als aliphatisches Polyamin **A4** geeignet sind Amine mit zwei oder drei aliphatischen Aminogruppen, insbesondere die folgenden handelsüblichen Polyamine:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Diamino-2,2,6-trimethylcyclohexan (TMCDA), Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,8-Menthandiamin und 1,3- und 1,4-Bis-(aminomethyl)benzol;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, 3,9-Bis-(3-aminopropyl)-2,4,8,10-tetraoxaspiro-[5.5]undecan, Bis-(3-aminopropyl)polytetrahydrofurane und andere Polytetrahydrofuran-diamine, Jeffamine® RFD-270 (von Huntsman), sowie Polyoxyalkylen-Diamine ("Polyether-Diamine"). Letztere stellen Produkte aus der Aminierung von Polyoxyalkylen-Diolen dar und sind beispielsweise erhältlich unter dem Namen Jeffamine® (von Huntsman), unter dem Namen Polyetheramin (von BASF) oder unter dem Namen PC Amine® (von Nitroil). Insbesondere geeignete Polyoxyalkylen-Diamine sind Jeffamine® D-230, Jeffamine® D-400, Polyetheramin D 230, Polyetheramin D 400, PC Amine® DA 250 und PC Amine® DA 400; und
- Polyoxyalkylen-Triamine ("Polyether-Triamine"), welche Produkte aus der Aminierung von Polyoxyalkylen-Triolen darstellen und beispielsweise erhältlich sind unter dem Handelsnamen Jeffamine® (von Huntsman), unter dem Namen Polyetheramin (von BASF) oder unter dem Namen PC Amine® (von Nitroil), wie insbesondere Jeffamine® T-403, Polyetheramin T403, und PC Amine® TA 403.

Besonders bevorzugt ist das Polyamin **A4** ausgewählt aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxa-octan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.
Diese Polyamine sind besonders gut zugänglich und führen bei der Reaktion mit Isocyanaten zu Harnstoffgruppen, welche besonders gut phasenseparieren. Damit hergestellte Klebstoffe weisen besonders hohe Festigkeiten, insbesondere hohe Elastizitätsmoduli, und eine wenig ausgeprägte Abhängigkeit der mechanischen Eigenschaften von der Temperatur auf.
Davon bevorzugt sind 1,3-Bis-(aminomethyl)cyclohexan und 1,3-Bis-(aminomethyl)benzol, am meisten bevorzugt ist 1,3-Bis-(aminomethyl)benzol. Mit diesen Polyaminen entstehen ausgehärtete Klebstoffe mit ganz besonders hohen Festigkeiten.

Die Auswahl des Triols **A1,** des Diols **A2,** des alkoxylierten aromatischen Diols **A3** und des Polyamins **A4** und deren Einsatz in bestimmten, sorgfältig aufeinander abgestimmten Verhältnissen verleiht dem Klebstoff gute Verarbeitungseigenschaften, eine ausgezeichnete Festigkeit im ausgehärteten Zustand, wobei amorphe und kristalline Bereiche sehr gut entmischt vorliegen, und eine nur schwach ausgeprägten Abhängigkeit der mechanischen Eigenschaften von der Temperatur, sowie die Möglichkeit der thermischen Entklebung von Klebeverbindungen in einem interessanten Temperaturbereich.

Das Triol **A1,** das Diol **A2** und das alkoxylierte aromatische Diol **A3** liegen im Klebstoff im Gewichtsverhältnis **A1**/(**A2**+**A3**) ≤ 10 vor.

Bevorzugt liegt das Gewichtsverhältnis **A1**/(**A2**+**A3**) im Bereich von 3 bis 10. Solche Klebstoffe weisen eine besonders vorteilhafte Kombination aus Festigkeit und Dehnbarkeit auf.

Das Diol **A2** liegt im Klebstoff in einer solchen Menge vor, dass das Gewichtsverhältnis **A1**/**A2** zwischen dem Triol **A1** und dem Diol **A2** ≤ 15 beträgt. Bevorzugt liegt das Gewichtsverhältnis **A1**/**A2** bei 10 oder darunter. Ein solcher Klebstoff verfügt über hohe Festigkeiten bei guter Dehnbarkeit.

Besonders bevorzugt liegt das Gewichtsverhältnis **A1**/**A2** im Bereich von 5 bis 10. Ein solcher Klebstoff verfügt über ein besonders temperaturunabhäniges Elastizitätsmodul.

Bevorzugt liegt das alkoxylierte aromatische Diol **A3** im Klebstoff in einer solchen Menge vor, dass das Gewichtsverhältnis **A2**/**A3** im Bereich von 0.5 bis 7.5, insbesondere 1.5 bis 7.4, liegt. Solche Klebstsoffe verfügen über hohe Festigkeiten und die Fähigkeit zum thermischen Entkleben.
In einem Aspekt der Erfindung liegt das Gewichtsverhältnis **A2**/**A3** bevorzugt bei 3.5 oder darunter, besonders bevorzugt im Bereich von 0.5 bis 3.5, insbesondere im Bereich von 0.8 bis 3. Solche Klebstoffe ergeben Klebeverbindungen, welche thermisch besonders gut entklebt werden können.
In einem weiteren Aspekt der Erfindung liegt das Gewichtsverhältnis **A2**/**A3** bevorzugt bei 3.5 - 15, besonders bevorzugt im Bereich von 3.5 bis 7.5, und insbesondere im Bereich von 3.6 bis 7.4. Solche Klebstoffe ergeben besonders hohe Zugscherfestigkeiten.
In einem weiteren Aspekt der Erfindung liegt das Gewichtsverhältnis **A2**/**A3** bevorzugt bei 3.5 oder darunter, besonders bevorzugt im Bereich von 0.5 bis 3.5, insbesondere im Bereich von 0.8 bis 2. Solche Klebstoffe ergeben besonders hohe Frühfestigkeiten, was insbesondere bei automatisierten Verklebungen vorteilhaft ist, da dadurch eine frühe Belastung der Klebeverbindung möglich ist, was hohe Taktzeiten ermöglicht. Ein Mass für eine hohe Frühfestigkeit sind hohe Werte für die Zugscherfestigkeit während der Aushärtung.

Bevorzugt liegt das Polyamin **A4** im Klebstoff in einer solchen Menge vor, dass das Gewichtsverhältnis **A1**/(**A2**+**A4**) im Bereich von 4.5 bis 11 liegt. Solche Klebstoffe zeigen eine gut handhabbare Offenzeit, eine gute Standfestigkeit bei der Applikation.
Besonders bevorzugt liegt das Gewichtsverhältnis **A1**/(**A2**+**A4**) im Bereich von 4.5 bis 6.5. Diese Klebstoffe verfügen weiterhin über hohe Festigkeiten bei Raumtemperatur und 85 °C und einen besonders geringen Anstieg des E-Moduls zwischen Raumtemperatur und -35 °C.

Als Polyisocyanat **B1** geeignet sind insbesondere monomere Di- oder Triisocyanate, sowie Oligomere, Polymere und Derivate von monomeren Di- oder Triisocyanaten, sowie beliebige Mischungen davon.
Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.
Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-lsocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.
Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt als Polyisocyanat **B1** sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- und 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.
Besonders bevorzugt als Polyisocyanat **B1** sind polymeres MDI und insbesondere bei Raumtemperatur flüssige MDI-Typen, welche Anteile von MDI-Carbodiimiden oder deren Addukten enthalten.
Mit diesen Polyisocyanaten **B1** werden besonders gute Verarbeitungseigenschaften und besonders hohe Festigkeiten erhalten.

Das Polyurethanpolymer **B2** weist bevorzugt 50 - 95 Massenprozente, insbesondere 70 - 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht gute Dehnbarkeiten.
Das Polyurethanpolymer **B2** weist bevorzugt ein mittleres Molekulargewicht von 1'000 bis 20'000 g/mol, besonders bevorzugt von 2'000 bis 10'000 g/mol, auf.
Das Polyurethanpolymer **B2** weist bevorzugt eine mittlere NCO-Funktionalität im Bereich von 1.7 bis 3, insbesondere von 1.8 bis 2.5, auf. Ein solches Polyurethanpolymer ermöglicht gute Verarbeitungseigenschaften und gute mechanische Eingenschaften im ausgehärteten Zustand.
Besonders bevorzugt weist das Polyurethanpolymer **B2** eine mittlere NCO-Funktionalität im Bereich von 2.05 bis 2.5 auf. Ein solches Polyurethanpolymer ermöglicht eine gute Dehnbarkeit bei hoher Festigkeit.
Das Polyurethanpolymer **B2** weist bevorzugt einen Gehalt an freien Isocyanatgruppen von 1 bis 10 Gewichts-%, besonders bevorzugt von 1 bis 5 Gewichts-%, auf.

Die Urethangruppen und die freien Isocyanatgruppen des Polyurethanpolymers **B2** sind bevorzugt abgeleitet von 4,4'-Diphenylmethandiisocyanat. Damit werden bei der Aushärtung des Klebstoffes besonders gute Hartsegmente und somit besonders hohe Festigkeiten erhalten.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO / OH-Verhältnis" wird das Verhältnis der Anzahl der eingesetzten Isocyanatgruppen zu der Anzahl der eingesetzten Hydroxylgruppen verstanden.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Speziell geeignet sind sogenannte Ethylenoxid-terminierte ("EO-endcapped", ethylene oxide-endcapped) Polyoxypropylenpolyole.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emeraid Performance Materials LLC) hergestellt werden können; sowie hydrierte polyhydroxyfunktionelle Polymere oder Copolymere von Dienen.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.
Das Polyol zur Herstellung eines Polyurethanpolymers **B2** weist bevorzugt ein Molekulargewicht von 500 - 20'000 g/mol, insbesondere von 1'000 bis 8'000 g/mol, auf.
Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (m- und p-TMXDI). Bevorzugt sind MDI, TDI, IPDI und HDI. Besonders bevorzugt ist MDI. Am meisten bevorzugt ist 4,4'-Diphenylmethandiisocyanat. Mit diesem MDI-Isomeren werden bei der Aushärtung mit den Diolen **A2** und Polyaminen **A4** besonders gute Hartsegmente und somit besonders hohe Festigkeiten erhalten.

Vorzugsweise handelt es sich beim Polyisocyanat **B1** und dem zur Herstellung des Polyurethanprepolymers **B2** verwendeten Polyisocyanat um einen unterschiedlichen Typ Polyisocyanat.
Besonders bevorzugt handelt es sich beim Polyisocyanat **B1** um ein bei Raumtemperatur flüssiges MDI und beim zur Herstellung des Polyurethanpolymers **B2** verwendeten Polyisocyanat um 4,4'-Diphenylmethandiisocyanat, welches bei Raumtemperatur typischerweise fest ist. Damit ist die zweite Komponente bei Raumtemperatur flüssig, was eine einfache Verarbeitung ermöglicht, und es werden besonders gute mechanische Eingenschaften ermöglicht. Eine definierte Mischung aus Polyisocyanat **B1** und Polyurethanpolymer **B2** lässt sich dadurch erreichen, dass das Polyurethanpolymer **B2** vorgängig separat hergestellt wird, bevor es mit dem Polyisocyanat **B1** vermischt wird.

Bevorzugt erfolgt die Herstellung das Polyurethanpolymers **B2** somit nicht in Anwesenheit des Polyisocyanates **B1.**

Vorzugsweise beträgt das Gewichtsverhältnis zwischen dem Polyisocyanat **B1** und dem Polyurethanpolymer **B2** 0.25 bis 4, bevorzugt 0.25 bis 2, besonders bevorzugt 0.3 bis 1.5, und insbesondere 0.4 bis 1.0. Eine solche zweite Komponente ermöglicht Klebstoffe mit guter Verarbeitbarkeit, hoher Festigkeit und hoher Dehnung.

Der Polyurethanklebstoff kann als Bestandteil der ersten Komponente zusätzlich weitere mit Isocyanatgruppen reaktionsfähige Substanzen enthalten. Insbesondere kann die erste Komponente mindestens ein Polyol und/oder mindestens einen niedrigmolekularen zwei- oder mehrwertigen Alkohol enthalten, welche zur Herstellung des Polyurethanpolymers **B2** genannt wurden.

Weiterhin kann der Polyurethanklebstoff Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU).

Der Polyurethanklebstoff kann neben den genannten weitere in zweikomponentigen Polyurethanzusammensetzungen üblicherweise eingesetzte Bestandteile enthalten, insbesondere die Folgenden:
- Weichmacher;
- Lösemittel;
- anorganische und organische Füllstoffe;
- Fasern, beispielsweise aus Polyethylen;
- Pigmente;
- Rheologie-Modifizierer, insbesondere Verdickungsmittel oder Thixotropiermittel;
- Trocknungsmittel;
- Haftvermittler;
- Stabilisatoren gegen Oxidation, Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.
Es ist vorteilhaft, beim Einsatz von weiteren Bestandteilen des Polyurethanklebstoffs darauf zu achten, dass diese die Lagerstabilität der jeweiligen Komponente nicht stark beeinträchtigen. Falls solche Substanzen zusammen mit Isocyanaten gelagert werden sollen, bedeutet dies insbesondere, dass sie kein oder höchstens Spuren von Wasser enthalten sollten. Es kann sinnvoll sein, gewisse Bestandteile vor dem Einmischen chemisch oder physikalisch zu trocknen.

Die Komponenten des Polyurethanklebstoffs werden vorteilhaft derart formuliert, dass das Mischungsverhältnis der Volumen zwischen der ersten und der zweiten Komponente im Bereich von 1:3 bis 3:1, insbesondere 1:2 bis 2:1, liegt. Bevorzugt beträgt dieses Verhältnis ungefähr 1:1.
Das Mischungsverhältnis wird vorzugsweise so eingestellt, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung ungefähr im Bereich von 1.2 bis 1, bevorzugt 1.1 bis 1, liegt.

Die Herstellung der beiden Komponenten erfolgt getrennt voneinander und, zumindest für die zweite Komponente, typischerweise unter Ausschluss von Feuchtigkeit. Die Komponenten werden typischerweise jeweils in einem eigenen Gebinde gelagert. Die weiteren Bestandteile des Polyurethanklebstoffs können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube.

Die beiden Komponenten werden vor der Anwendung getrennt voneinander gelagert und erst bei oder unmittelbar vor der Anwendung miteinander vermischt. Die Komponenten sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils eine der beiden Komponenten des Polyurethanklebstoffs enthält.
Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.
Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.
Das Mischen erfolgt typischerweise über Statikmischer oder mit Hilfe von dynamischen Mischern. Beim Mischen ist darauf zu achten, dass die zwei Komponenten möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.
Beim Kontakt der ersten Komponente mit Isocyanatgruppen der zweiten Komponente beginnt die Aushärtung durch chemische Reaktion. Dabei reagieren die Aminogruppen des Polyamins **A4** und die Hydroxylgruppen des Triols **A1** des Diols **A2** und des Diols **A3** und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Aspekt der vorliegenden Erfindung betrifft ein Verfahren zum Verkleben von einem ersten Substrat mit einem zweiten Substrat, welches die Schritte umfasst:
- Mischen der beiden vorgängig beschriebenen Komponenten,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.
Dabei können die beiden Substrate aus dem gleichen oder unterschiedlichen Materialien bestehen. Ausdiesem Verfahren resultiert eine Klebeverbindung.

In diesem Verfahren zum Verkleben sind geeignete Substrate insbesondere
- Glas, Glaskeramik;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Backstein, Ziegel, Gips und Natursteine wie Granit oder Marmor.

In diesem Verfahren ist eines oder beide Substrate bevorzugt ein Metall oder eine Keramik oder ein Glasfaser-verstärkter Kunststoff oder ein Kohlefaser-verstärkter Kunststoff.

Die Substrate können bei Bedarf vor dem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus diesem beschriebenen Verfahren zum Verkleben entsteht ein Artikel, bei welchem der Klebstoff zwei Substrate kraftschlüssig miteinander verbindet. Dieser Artikel ist insbesondere ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels.

Ein weiterer Gegenstand der Erfindung ist ein Artikel erhalten aus dem vorgehend beschriebenen Verfahren zum Verkleben.

Es kann vorteilhaft sein, wenn das Verfahren zum Verkleben nach dem Schritt
- Aushärten des Polyurethanklebstoffs
   einen weiteren Schritt
- Erhitzen der Klebeverbindung enthaltend den ausgehärteten Polyurethanklebstoff
zum Lösen bzw. Entkleben der Klebeverbindung aufweist.
Vorzugsweise wird dabei die Erhitzung bei einer Temperatur von mindestens 120 °C, bevorzugt im Bereich von 140 °C bis 200 °C, besonders bevorzugt im Bereich von 150 bis 160 °C, ausgeführt, für eine Zeitdauer von mindestens 10 Minuten, bevorzugt mindestens 20 Minuten, besonders bevorzugt während 20 bis 180 Minuten, am meisten bevorzugt während 25 bis 45 Minuten.

Die Erhitzung erfolgt insbesondere mittels Infrarotstrahler, Warmluftföhn, Induktionsheizgerät oder in einem Ofen.
Die Erhitzung führt zu einer Schwächung des ausgehärteten Klebstoffs in Bezug auf dessen Festigkeit. Dadurch können die Substrate mit einem relativ geringen Kraftaufwand mechanisch vom Klebstoff getrennt werden, d.h. die Klebeverbindung ist gut lösbar. Als geringer Kraftaufwand wird dabei eine Kraft von weniger als 2 MPa, insbesondere eine Kraft im Bereich von 1.5 bis 0.2 MPa, bezeichnet.
Besonders gute Eigenschaften zum Entkleben weisen Klebstoffe auf, die eine gewisse Menge an alkoxyliertem aromatischem Diol **A3** enthalten, insbesondere solche Klebstoffe, bei denen das Gewichtsverhältnis **A2/A3** bei 3.5 oder darunter liegt.

Die Möglichkeit zum thermischen Lösen von Klebeverbindungen ist insbesondere im Falle der Reparatur eines verklebten Werkstücks sehr vorteilhaft, da dadurch durch Erhitzen der Klebeverbindung beschädigte oder fehlerhafte verklebte Substrate leicht ausgetauscht werden können. So kann beispielsweise bei einem Fahrzeug, dessen Teile mit einem erfindungsgemässen Klebstoff verbunden sind, ein einzelner Klebeverbund gezielt erwärmt und somit gelöst werden, ohne dass der Rest des Fahrzeugs beeinträchtigt wird.

Der beschriebene Polyurethanklebstoff weist sehr gute Eigenschaften als struktureller Klebstoff auf.
Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.
Eine weitere wichtige Eigenschaft eines strukturellen Klebstoffs ist seine gute Verarbeitbarkeit. Dabei sollen die beiden Komponenten einzeln und beim Vermischen eine niedrige Viskosität aufweisen, sodass sie gut förderbar und mischbar sind, dann aber sehr schnell eine solche Viskosität aufbauen, dass unmittelbar ein strukturviskoses, standfestes Material erhalten wird, sodass Schichtdicken von bis zu 10 Millimetern und mehr aufgetragen werden können. Mit dem beschriebenen Polyurethanklebstoff sind diese Anforderungen besonders gut erfüllbar.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. verwendete Substanzen:

| | |
|---|---|
| Polyisocyanat | modifiziertes Diphenylmethandiisocyanat enthaltend MDI-Carbodiimid-Addukte, bei Raumemperatur flüssig, NCO-Gehalt 29.4 Gewichts-% (Isonate® M 143 von Dow) |
| Triol-1 | EO-endcapped Polyoxypropylentriol, OH-Zahl 34.7 mg KOH/g (Voranol® CP 4755 von Dow) |
| Triol-2 | Polyoxypropylentriol, OH-Zahl 400 mg KOH/g (Lupranol 3300 von BASF) |
| MXDA | 1,3-Bis-(aminomethyl)benzol, OH-Zahl 34.7 mg KOH/g |
| propoxyliertes BPA | propoxyliertes Bisphenol A, OH-Zahl 280 mg KOH/g (Simusol™ BPIP/P von Seppic) |
| DABCO | 1,4-Diazabicyclo[2.2.2]octan, 33.0 Gewichts-% in Dipropylenglykol (DABCO 33 LV® von Air Products) |
| Kieselsäure | pyrogene Kieselsäure, hydrophob modifiziert |

Das **Polymer-1** wurde hergestellt, indem 1300 g Polyoxypropylen-Diol (Acclaim® 4200 N von Bayer; OH-Zahl 28.5 mg KOH/g), 2600 g Polyoxypropylen-polyoxyethylen-Triol (Caradol® MD34-02 von Shell; OH-Zahl 35.0 mg KOH/g), 600 g 4,4'-Methylendiphenyldiisocyanat (Desmodur® 44 MC L von Bayer) und 500 g Diisodecylphthalat nach bekanntem Verfahren bei 80 °C zu einem NCOterminierten Polyurethanpolymer mit einem Gehalt an freien Isocyanat-Gruppen von 2.1 Gewichts-% umgesetzt wurden.

### 2. Herstellung von Polyurethanklebstoffen

Für jeden Klebstoff wurden die in den Tabellen 1 und 2 angegebenen Inhaltsstoffe in den angegebenen Mengen (in Gewichtsteilen) der ersten Komponente ("Komponente-1") mittels eines Vakuumdissolvers unter Feuchtigkeitsausschluss zu einer homogenen Paste verarbeitet und aufbewahrt. Ebenso wurden die in den Tabellen 1 und 2 angegebenen Inhaltsstoffe der zweiten Komponente ("Komponente-2") verarbeitet und aufbewahrt. Anschliessend wurden die beiden Komponenten mittels einem SpeedMixer® (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1B, gebracht und während 24 h bei 25°C und anschliessend während 3h bei 80°C gelagert bzw. ausgehärtet.
Nach einer Konditionierungszeit von 24h bei der in den Tabellen 1 und 2 angegebenen Temperatur (- 35 °C bzw. 23 °C bzw. 85 °C) wurden das Elastizitätsmodul im Bereich von 0.05 bis 0.25 % Dehnung ("**E-Modul**") die **Zugfestigkeit** und die **Bruchdehnung** der so hergestellten Probekörper gemäss ISO 527 auf einer Zwick Z020 Zugprüfmaschine bei der jeweils in der Tabelle angegebenen Temperatur und einer Prüfgeschwindigkeit 50 mm/ min gemessen.
Zur Messung der **Zugscherfestigkeit** wurden diverse Prüfkörper hergestellt, wobei der Klebstoff jeweils 1 Minute nach Abschluss der Mischzeit zwischen zwei mit Isopropanol entfetteten KTL-lackierten Stahlblechen in einer Schichtdicke von 2 mm und auf einer überlappenden Klebefläche 15 x 45 mm aufgebracht wurde. An diesen Prüfkörpern wurde die Zugscherfestigkeit bei nach DIN EN 1465 bestimmt, wobei die Prüfkörper vor der Messung unterschiedlich gelagert waren: entweder für 1 h bei 23 °C; oder für 3 h bei 23 °C; oder für 12 h bei 23 °C, anschliessend für 3 h bei 80 °C und dann 24 h bei 23 °C konditioniert wurden.
Die Resultate sind in den Tabellen 1 und 2 angegeben.

Die Angaben **A1**/(**A2**+**A3**), **A1**/**A2**, **A2**/**A3** und **A1**/(**A2**+**A4**) in den Tabellen 1 und **2** beziehen sich auf die Gewichtsverhältnisse der vorhandenen Triole **A1,** Diole **A2,** alkoxylierten aromatischen Diole **A3** und Polyamine **A4** im jeweiligen Klebstoff.

Die Tabelle 3 zeigt Versuche zum **Entkleben.** Dafür wurden von den Klebstoffen ***EZ 1*** bis ***EZ3, Ref.* 1** und ***Ref. 3*** Klebeverbindungen in Form von Prüfkörpern für die Bestimmung der Zugscherfestigkeit hergestellt, wie vorgängig bereits beschrieben. Alle Prüfkörper wurden 12 h bei 23 °C, dann 3 h bei 80 °C gelagert und anschliessend 24 h bei 23 °C konditioniert, bevor sie jeweils in einem Ofen unterschiedlich erhitzt wurden, wie in Tabelle 3 angegeben. Nach der Hitzebehandlung wurden die Prüfkörper 24 Stunden bei 23 °C konditioniert und dann die Zugscherfestigkeit bestimmt.

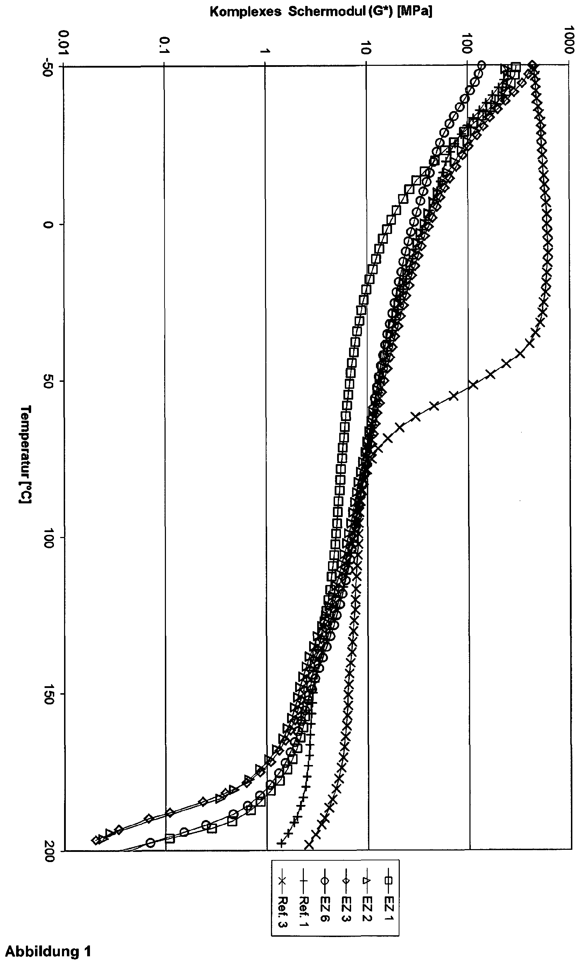

Die Abbildung 1 zeigt **DMTA-Messungen** von während 7 Tagen im Normklima (23 °C, 50 % relative Feuchtigkeit) ausgehärteten Filmen, durchgeführt mit einem Mettler DMA/SDTA 861e. Die Messbedingungen waren: Messung in Scherung, 10 Hz Anregungsfrequenz und Aufheizrate von 5 K/min. Als Probekörper dienten scheibenförmige Proben (Dicke 2-3 mm, Durchmesser 10 mm). Diese wurden auf - 60 °C abgekühlt und dann unter Bestimmung des komplexen Schermoduls G* [MPa] bis auf 200 °C erwärmt.

Bei den Klebstoffen ***EZ 1*** bis ***EZ 6*** handelt es sich um erfindungsgemässe Beispiele, bei den Klebstoffen ***Ref. 1*** bis ***Ref. 5*** handelt es sich um Vergleichsbeispiele.

Alle hergestellten Klebstoffe zeigten unmittelbar nach dem Vermischen der beiden Komponenten eine standfeste Konsistenz.

Der Klebstoff ***EZ 3*** wurde 1 Minute nach Abschluss der Mischzeit der beiden Komponenten auf ein zuvor mit Isopropanol entfettetes Glasfaser-verstärktes Kunststoffplättchen aufgetragen und mit einem zweiten gleichen Plättchen bedeckt, sodass eine überlappende Klebefläche von 15 x 45 mm bei einer Schichtdicke von 2 mm entstand, für 24 h bei 23 °C und anschliessend 3 h bei 80 °C ausgehärtet und nach einer Konditionierungszeit von 24h bei 23 °C die Zugscherfestigkeit wie bereits beschrieben bestimmt, wobei ein kohäsives Bruchbild resultierte.
Ebenso wurden mit dem Klebstoff ***EZ 3*** zwei Kohlefaser-verstärkte Kunststoffplättchen verklebt und die Zugscherfestigkeit bei 23 °C bestimmt, wobei ein kohäsives Bruchbild resultierte.

**Tabelle 1: Zusammensetzung und Eigenschaften von EZ 1 bis EZ 6 (Mengenangaben in Gewichtsteilen) "n.b". steht für "nicht bestimmt"**

| **Klebstoff** | ***EZ* 1** | ***EZ 2*** | ***EZ 3*** | ***EZ 4*** | ***EZ 5*** | ***EZ 6*** |
|---|---|---|---|---|---|---|
| ***Komponente-1*** | | | | | | |
| Triol-1 | 52.5 | 50.5 | 51.5 | 50.5 | 52.0 | 53.5 |
| 1,4-Butandiol | 3.5 | 7.1 | 7.3 | 7.5 | 7.4 | 6.5 |
| propoxyliertes BPA | 4.0 | 4.0 | 2.0 | 2.0 | 1.0 | 1.0 |
| MXDA | 1.7 | 1.7 | 1.7 | 1.7 | 1.7 | 1.7 |
| DABCO | 0.3 | 0.3 | 0.3 | 0.3 | 0.3 | 0.3 |
| calciniertes Kaolin | 34.0 | 32.9 | 33.7 | 34.0 | 33.6 | 32.6 |
| Molekularsieb | 4.0 | 3.5 | 3.5 | 4.0 | 4.0 | 4.0 |

| ***Komponente-2*** | | | | | | |
|---|---|---|---|---|---|---|
| Polyisocyanat | 22.9 | 34.8 | 34.0 | 34.4 | 34.0 | 30.4 |
| Polymer-1 | 32.7 | 49.7 | 48.6 | 49.2 | 48.6 | 43.5 |
| Kieselsäure | 2.3 | 3.5 | 3.4 | 3.5 | 3.4 | 3.1 |
| **-35** °**C**: Zugfestigkeit [MPa] | 37 | 41 | 38 | 39 | 38 | n.b. |
| Bruchdehnung [%] | 246 | 216 | 220 | 195 | 219 | n.b. |
| E-Modul [MPa] | 152 | 253 | 210 | 245 | 205 | n.b. |
| **23 °C:** Zugfestigkeit [MPa] | 11 | 15 | 13 | 14 | 13 | n.b. |
| Bruchdehnung [%] | 193 | 249 | 255 | 224 | 238 | n.b. |
| E-Modul [MPa] | 18 | 42 | 39 | 41 | 35 | n.b. |
| **85 °C:** Zugfestigkeit [MPa] | 5 | 7 | 6 | 7 | 6 | n.b. |
| Bruchdehnung [%] | 96 | 127 | 134 | 115 | 116 | n.b. |
| E-Modul [MPa] | 13 | 23 | 16 | 23 | 21 | n.b. |
| **Zugscherfestigkeit:** [MPa] | | | | | | |
| nach 1h 23°C | 0.7 | 1.3 | 0.7 | 0.4 | 0.5 | n.b. |
| nach 3h 23°C | 4.0 | 3.4 | 2.5 | 2.0 | 2.8 | n.b. |
| nach 12h 23°C und 3h 80°C | 8.5 | 7.4 | 10.5 | 10.5 | 10.4 | n.b. |
| **A1**/(**A2**+**A3**) | 7.0 | 4.6 | 5.5 | 5.3 | 6.2 | 7.1 |
| **A1**/**A2** | 15.0 | 7.1 | 7.1 | 6.7 | 7.0 | 8.2 |
| **A2**/**A3** | 0.9 | 1.8 | 3.7 | 3.8 | 7.4 | 6.5 |
| **A1**/(**A2**+**A4**) | 10.1 | 5.8 | 5.7 | 5.5 | 5.7 | 6.5 |

**Tabelle 2: Zusammensetzung und Eigenschaften von Ref. 1 bis Ref. 5 (Mengenangaben in Gewichtsteilen) "n.b". steht für "nicht bestimmt"**

| **Klebstoff** | ***Ref. 1*** | ***Ref. 2*** | ***Ref. 3*** | ***Ref. 4*** | ***Ref. 5*** |
|---|---|---|---|---|---|
| ***Komponente-1*** | | | | | |
| Triol-1 | 52.2 | 52.5 | - | 44.3 | 52.5 |
| Triol-2 | - | - | 26.0 | - | - |
| 1,4-Butandiol | 7.4 | - | - | 15.3 | - |
| 2-Ethyl-1,3-hexandiol | - | - | - | - | 7.4 |
| propoxyliertes BPA | - | 7.4 | 15.0 | - | - |
| MXDA | 2.0 | 2.0 | 1.0 | 2.0 | 2.0 |
| DABCO | 0.2 | 0.2 | 0.2 | 0.2 | 0.2 |
| calciniertes Kaolin | 34.2 | 33.9 | 50.8 | 33.3 | 33.3 |
| Molekularsieb | 4.0 | 4.0 | 7.0 | 4.9 | 4.9 |

| ***Komponente-2*** | | | | | |
|---|---|---|---|---|---|
| Polyisocyanat | 33.2 | 14.2 | 27.7 | 58.1 | 24.5 |
| Polymer-1 | 47.5 | 20.3 | 39.6 | 83.1 | 35.0 |
| Kieselsäure | 3.4 | 1.4 | 2.8 | 5.9 | 2.5 |
| **-35 °C**: Zugfestigkeit [MPa] | 34 | 42 | n.b. | 34 | 40 |
| Bruchdehnung [%] | 233 | 257 | n.b. | 134 | 199 |
| E-Modul [MPa] | 196 | 90 | n.b. | 309 | 355 |
| **23 °C:** Zugfestigkeit [MPa] | 13 | 9 | n.b. | 15 | 10 |
| Bruchdehnung [%] | 234 | 196 | n.b. | 191 | 194 |
| E-Modul [MPa] | 52 | 11 | n.b. | 91 | 14 |
| **85 °C:** Zugfestigkeit [MPa] | 6 | 4 | n.b. | 8 | 5 |
| Bruchdehnung [%] | 98 | 94 | n.b. | 139 | 81 |
| E-Modul [MPa] | 21 | 11 | n.b. | 37 | 11 |
| **Zugscherfestigkeit:** [MPa] | | | | | |
| nach 1h 23°C | 0.5 | 0.7 | n.b. | n.b. | n.b. |
| nach 3h 23°C | 2.7 | 5.1 | n.b. | n.b. | n.b. |
| nach 12h 23°C und 3h 80°C | 9.6 | 6.9 | n.b. | 6.8 | 6.8 |
| **A1**/(**A2**+**A3**) | 7.1 | 7.1 | - | 2.9 | - |
| **A1**/**A2** | 7.1 | - | - | 2.9 | 7.1 |
| **A2**/**A3** | - | 0 | 0 | - | - |
| **A1**/(**A2**+**A4**) | 5.6 | - | - | 2.6 | - |

**Tabelle 3.**

| **Klebstoff** | ***EZ** 1* | ***EZ 2*** | ***EZ 3*** | ***Ref. 1*** | ***Ref. 3*** |
|---|---|---|---|---|---|
| **Zugscherfestigkeit:** [MPa] | | | | | |
| nach 30 min. 120°C | 7.6 | 10.0 | 10.0 | 10.2 | 9.3 |
| nach 30 min. 140°C | 3.8 | 7.5 | 7.4 | 9.0 | 8.9 |
| nach 30 min. 150°C | 0.6 | 1.5 | 0.9 | 1.6 | n.b. |
| nach 30 min. 160°C | 0.4 | 1.0 | 0.6 | 0.6 | 8.4 |
| nach 30 min. 180°C | 0.3 | 0.8 | 0.2 | 0.5 | 4.8 |

Aus der Tabelle 3 und der Abbildung 1 ist ersichtlich, dass bei den erfindungsgemässen Klebstoffen bei Temperaturen oberhalb 140 °C eine thermische Destabilisierung auftritt, welche bei den Klebstoffen ***Ref.1*** und ***Ref.3*** nicht in diesem Ausmass feststellbar ist.

## Patentansprüche

1. Polyurethanklebstoff bestehend aus einer ersten und einer zweiten Komponente, wobei
- die erste Komponente
a) mindestens ein Triol **A1** mit einem Molekulargewicht im Bereich von 1'000 bis 10'000 g/mol,
b) mindestens ein Diol **A2** mit zwei primären Hydroxylgruppen und einem Molekulargewicht im Bereich von 60 bis 150 g/mol,
c) mindestens ein alkoxyliertes aromatisches Diol **A3** mit einem Molekulargewicht im Bereich von 300 bis 1'000 g/mol, und
d) mindestens ein aliphatisches Polyamin **A4** mit einem Molekulargewicht im Bereich von 60 bis 500 g/mol, wobei es sich bei dem aliphatischen Polyamin **A4** um ein Amin mit zwei oder drei aliphatischen Aminogruppen handelt, ausgewählt aus:
- aliphatischen, cycloaliphatischen oder arylaliphatischen primären Diaminen,
- Ethergruppen-haltigen aliphatischen primären Diaminen, und
- Polyoxyalkylen-Triaminen, welche Produkte aus der Aminierung von Polyoxyalkylen-Triolen darstellen, enthält; und
- die zweite Komponente
e) mindestens ein Polyisocyanat **B1** und
f) mindestens ein Isocyanatgruppen aufweisendes Polyurethanpolymer **B2** enthält;
- wobei das Triol **A1,** das Diol **A2** und das alkoxylierte aromatische Diol **A3** in einer solchen Menge vorhanden sind, dass
g) das Gewichtsverhältnis **A1**/(**A2**+**A3**) ≤ 10, und
h) das Gewichtsverhältnis **A1**/**A2** ≤ 15 beträgt.

2. Polyurethanklebstoff gemäss Anspruch 1, **dadurch gekennzeichnet, dass** das Triol **A1** ein Polyethertriol ist.

3. Polyurethanklebstoff gemäss Anspruch 1 oder 2, **dadurch gekennzeichnet, dass** das Triol **A1** primäre Hydroxylgruppen aufweist.

4. Polyurethanklebstoff gemäss einem der Ansprüche 1 bis 3, **dadurch gekennzeichnet, dass** das Diol **A2** ausgewählt ist aus der Gruppe bestehend aus 1,3-Propandiol, 1,4-Butandiol und 1,5-Pentandiol.

5. Polyurethanklebstoff gemäss einem der Ansprüche 1 bis 4, **dadurch gekennzeichnet, dass** das alkoxylierte aromatische Diol **A3** ein ethoxyliertes und/oder propoxyliertes und/oder ein butoxyliertes aromatisches Diol darstellt.

6. Polyurethanklebstoff gemäss Anspruch 5, **dadurch gekennzeichnet, dass** das alkoxylierte aromatische Diol **A3** ein propoxyliertes Bisphenol A oder ein propoxyliertes Bisphenol F darstellt.

7. Polyurethanklebstoff gemäss einem der Ansprüche 1 bis 6, **dadurch gekennzeichnet, dass** das Polyamin **A4** ausgewählt ist aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

8. Polyurethanklebstoff gemäss einem der Ansprüche 1 bis 7, **dadurch gekennzeichnet, dass** Gewichtsverhältnis **A1**/(**A2**+**A3**) im Bereich von 3 bis 10 liegt.

9. Polyurethanklebstoff gemäss einem der Ansprüche 1 bis 8, **dadurch gekennzeichnet, dass** Gewichtsverhältnis **A1**/**A2** im Bereich von 5 bis 10 liegt.

10. Polyurethanklebstoff gemäss einem der Ansprüche 1 bis 8, **dadurch gekennzeichnet, dass** das Gewichtsverhältnis **A2**/**A3** im Bereich von 0.5 bis 7.5 liegt.

11. Polyurethanklebstoff gemäss einem der Ansprüche 1 bis 10, **dadurch gekennzeichnet, dass** das Polyisocyanat **B1** eine bei Raumtemperatur flüssige Form von 4,4'-, 2,4'- und 2,2'-Diphenylmethandiisocyanat und beliebige Gemische dieser Isomeren (MDI) in Form von polymerem MDI oder MDI mit Anteilen von Oligomeren oder Derivaten ist.

12. Polyurethanklebstoff gemäss einem der Ansprüche 1 bis 11, **dadurch gekennzeichnet, dass** die Urethangruppen und die freien Isocyanatgruppen des Polyurethanpolymers **B2** abgeleitet sind von 4,4'-Diphenylmethandiisocyanat.

13. Verfahren zum Verkleben von einem ersten Substrat mit einem zweiten Substrat, welches die Schritte umfasst:
- Mischen der beiden Komponenten eines Polyurethanklebstoffs gemäss einem der Ansprüche 1 bis 12,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

14. Verfahren gemäss Anspruch 13, **dadurch gekennzeichnet, dass** eines oder beide Substrate ein Metall oder eine Keramik oder ein Glasfaser-verstärkter Kunststoff oder ein Kohlefaser-verstärkter Kunststoff ist.

15. Artikel erhalten aus einem Verfahren zum Verkleben gemäss einem der Ansprüche 13 oder 14.

## Claims

1. A polyurethane adhesive composed of a first and a second component, wherein
- the first component contains
a) at least one triol **A1** having a molecular weight in the range of 1,000 to 10,000 g/mol,
b) at least one diol **A2** having two primary hydroxyl groups and a molecular weight in the range of 60 to 150 g/mol,
c) at least one alkoxylated aromatic diol **A3** having a molecular weight in the range of 300 to 1,000 g/mol, and
d) at least one aliphatic polyamine **A4** having a molecular weight in the range of 60 to 500 g/mol, where the aliphatic polyamine **A4** is an amine having two or three aliphatic amino groups, selected from:
- aliphatic, cycloaliphatic or arylaliphatic primary diamines,
- aliphatic primary diamines containing ether groups, and
- polyoxyalkylenetriamines which are products from the amination of polyoxyalkylenetriols; and
- the second component contains
e) at least one polyisocyanate **B1** and
f) at least one polyurethane polymer **B2** having isocyanate groups;
- wherein the triol **A1,** the diol **A2** and the alkoxylated aromatic diol **A3** are present in such an amount that
g) the weight ratio **A1**/(**A2**+**A3**) ≤ 10, and
h) the weight ratio **A1**/**A2** ≤ 15.

2. The polyurethane adhesive according to claim 1, **characterized in that** the triol **A1** is a polyether triol.

3. The polyurethane adhesive according to claim 1 or 2, **characterized in that** the triol **A1** has primary hydroxyl groups.

4. The polyurethane adhesive according to any one of claims 1 to 3, **characterized in that** the diol **A2** is selected from the group consisting of 1,3-propanediol, 1,4-butanediol and 1,5-pentanediol.

5. The polyurethane adhesive according to any one of claims 1 to 4, **characterized in that** the alkoxylated aromatic diol **A3** is an ethoxylated and/or a propoxylated and/or butoxylated aromatic diol.

6. The polyurethane adhesive according to claim 5, **characterized in that** the alkoxylated aromatic diol **A3** is a propoxylated bisphenol A or a propoxylated bisphenol F.

7. The polyurethane adhesive according to any one of claims 1 to 6, **characterized in that** the polyamine **A4** is selected from the group consisting of 1,5-diamino-2-methylpentane, 2,2,4- and 2,4,4-trimethylhexamethylenediamine, 1,8-octanediamine, 1,10-decanediamine, 1,12-dodecanediamine, 1-amino-3-aminomethyl-3,5,5-trimethylcyclohexane, 2- and 4-methyl-1,3-diaminocyclohexane and mixtures thereof, 1,3-bis(aminomethyl)cyclohexane, 1,4-bis(aminomethyl)cyclohexane, 2,5(2,6)-bis(aminomethyl)bicyclo[2.2.1]heptane, 3(4),8(9)-bis (aminomethyl)tricyclo[5.2.1.0^{2,6}]decane, bis (2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 1,3-bis(aminomethyl)benzene and 1,4-bis(aminomethyl)benzene.

8. The polyurethane adhesive according to any one of claims 1 to 7, **characterized in that** the weight ratio **A1**/(**A2**+**A3**) is in the range of 3 to 10.

9. The polyurethane adhesive according to any one of claims 1 to 8, **characterized in that** the weight ratio **A1**/**A2** is in the range of 5 to 10.

10. The polyurethane adhesive according to any one of claims 1 to 8, **characterized in that** the weight ratio **A2**/**A3** is in the range of 0.5 to 7.5.

11. The polyurethane adhesive according to any one of claims 1 to 10, **characterized in that** the polyisocyanate **B1** is a form of 4,4'-, 2,4'- and 2,2'-diphenylmethane diisocyanate that is liquid at room temperature and arbitrary mixtures of these isomers (MDI) in the form of polymeric MDI or MDI having fractions of oligomers or derivatives.

12. The polyurethane adhesive according to any one of claims 1 to 11, **characterized in that** the urethane groups and the free isocyanate groups of the polyurethane polymer **B2** are derived from 4,4'-diphenylmethane diisocyanate.

13. A method for bonding a first substrate to a second substrate, comprising the following steps:
- mixing of the two components of a polyurethane adhesive according to any one of claims 1 to 12,
- applying the mixed polyurethane adhesive to at least one of the substrate surfaces to be bonded,
- joining the substrates to be bonded within the open time,
- curing the polyurethane adhesive.

14. The method according to claim 13, **characterized in that** one substrate is, or both substrates are, a metal or a ceramic or a glass fiber-reinforced plastic material or a carbon fiber-reinforced plastic material.

15. An article obtained from a method for bonding according to any one of claims 13 or 14.

## Revendications

1. Adhésif à base de polyuréthane constitué par un premier et un deuxième composant,
- le premier composant contenant
a) au moins un triol A1 présentant un poids moléculaire dans la plage de 1000 à 10.000 g/mole,
b) au moins un diol A2 présentant deux groupes hydroxyle primaire et un poids moléculaire dans la plage de 60 à 150 g/mole
c) au moins un diol aromatique alcoxylé A3 pésentant un poids moléculaire dans la plage de 300 à 1000 g/mole, et
d) au moins une polyamine aliphatique A4 présentant un poids moléculaire dans la plage de 60 à 500 g/mole, la polyamine aliphatique A4 étant une amine ayant deux ou trois groupes amino aliphatiques choisis parmi :
- des diamines primaires aliphatiques, cycloaliphatiques ou arylaliphatiques,
- des diamines primaires aliphatiques contenant des groupes éther, et
- des triamines de polyoxyalkylène qui constituent des produits de l'amination de triols de polyoxyalkylène ; et
- le deuxième composant contenant
e) au moins un polyisocyanate B1 et
f) au moins un polymère de polyuréthane B2 présentant des groupes isocyanate ;
- le triol A1, le diol A2 et le diol aromatique alcoxylé A3 étant présents en une quantité telle que g) le rapport en poids A1/(A2+A3) soit ≤ 10, et h) le rapport en poids A1/A2 soit ≤ 15.

2. Adhésif à base de polyuréthane selon la revendication 1, **caractérisé en ce que** le triol A1 est un polyéthertriol.

3. Adhésif à base de polyuréthane selon la revendication 1 ou 2, **caractérisé en ce que** le triol A1 présente des groupes hydroxyle primaire.

4. Adhésif à base de polyuréthane selon l'une quelconque des revendications 1 à 3, **caractérisé en ce que** le diol A2 est choisi dans le groupe constitué par le 1,3-propanediol, le 1,4-butanediol et le 1,5-pentanediol.

5. Adhésif à base de polyuréthane selon l'une quelconque des revendications 1 à 4, **caractérisé en ce que** le diol aromatique alcoxylé A3 constitue un diol aromatique éthoxylé et/ou propoxylé et/ou butoxylé.

6. Adhésif à base de polyuréthane selon la revendication 5, **caractérisé en ce que** le diol aromatique alcoxylé A3 constitue un bisphénol A propoxylé ou un bisphénol F propoxylé.

7. Adhésif à base de polyuréthane selon l'une quelconque des revendications 1 à 6, **caractérisé en ce que** la polyamine A4 est choisie dans le groupe constitué par le 1,5-diamino-2-méthylpentane, la 2,2,4-triméthylhexaméthylènediamine et la 2,4,4-triméthylhexaméthylènediamine, la 1,8-octanediamine, la 1,10-décanediamine, la 1,12-dodécanediamine, le 1-amino-3-aminométhyl-3,5,5-triméthylcyclohexane, le 2-méthyl-1,3-diaminocyclohexane et le 4-méthyl-1,3-diaminocyclohexane et des mélanges de ceux-ci, le 1,3-bis-(aminométhyl)cyclohexane, le 1,4-bis-(aminométhyl)cyclohexane, le 2,5(2,6)-bis-(aminométhyl)-bicyclo[2,2,1]heptane, le 3(4),8(9)-bis-(aminométhyl)-tricyclo[5,2,1,0^{2,6}]décane, le bis-(2-aminoéthyl)éther, la 3,6-dioxaoctane-1,8-diamine, la 4,7-dioxadécane-1,10-diamine, la 4,7-dioxadécane-2,9-diamine, la 4,9-dioxadodécane-1,12-diamine, la 5,8-dioxadodécane-3,10-diamine, le 1,3-bis-(aminométhyl)-benzène et le 1,4-bis-(aminométhyl)benzène.

8. Adhésif à base de polyuréthane selon l'une quelconque des revendications 1 à 7, **caractérisé en ce que** le rapport en poids A1/(A2+A3) se situe dans la plage de 3 à 10.

9. Adhésif à base de polyuréthane selon l'une quelconque des revendications 1 à 8, **caractérisé en ce que** le rapport en poids A1/A2 se situe dans la plage de 5 à 10.

10. Adhésif à base de polyuréthane selon l'une quelconque des revendications 1 à 8, **caractérisé en ce que** le rapport en poids A2/A3 se situe dans la plage de 0,5 à 7,5.

11. Adhésif à base de polyuréthane selon l'une quelconque des revendications 1 à 10, **caractérisé en ce que** le polyisocyanate B1 est une forme, liquide à température ambiante, de diisocyanate de 4,4'-diphénylméthane, de diisocyanate de 2,4'-diphénylméthane et de diisocyanate de 2,2'-diphénylméthane et de mélanges quelconques de ces isomères (MDI) sous forme de MDI polymère ou de MDI présentant des proportions d'oligomères ou de dérivés.

12. Adhésif à base de polyuréthane selon l'une quelconque des revendications 1 à 11, **caractérisé en ce que** les groupes uréthane et les groupes isocyanate libres du polymère de polyuréthane B2 sont dérivés du diisocyanate de 4,4'-diphénylméthane.

13. Procédé pour le collage d'un premier substrat à un deuxième substrat, qui comprend les étapes de :
- mélange des deux composants d'un adhésif à base de polyuréthane selon l'une quelconque des revendications 1 à 12,
- application de l'adhésif à base de polyuréthane mélangé sur au moins l'une des surfaces de substrat à coller,
- assemblage des substrats à coller en un temps ouvert,
- durcissement de l'adhésif à base de polyuréthane.

14. Procédé selon la revendication 13, **caractérisé en ce qu'**un ou les deux substrats est/sont un métal ou une céramique ou un matériau synthétique renforcé par des fibres de verre ou un matériau synthétique renforcé par des fibres de carbone.

15. Article obtenu selon un procédé pour le collage selon l'une quelconque des revendications 13 et 14.
